**Europäisches Patentamt**

**European Patent Office**

**Office européen des brevets**

(19)

(11) Numéro de publication : **0 470 944 A1**

## (12) DEMANDE DE BREVET EUROPEEN

(21) Numéro de dépôt : **91870120.2**

(22) Date de dépôt : **07.08.91**

(51) Int. Cl.⁵ : **A01D 31/00,** A01D 33/00, A01B 63/00

(30) Priorité : **09.08.90 FR 9010365**

(43) Date de publication de la demande : **12.02.92 Bulletin 92/07**

(84) Etats contractants désignés : **ES IT**

(71) Demandeur : **Lovato, Vito**
**Faudoas**
**F-82500 Beaumont de Lomagne (FR)**

(72) Inventeur : **Lovato, Vito**
**Faudoas**
**F-82500 Beaumont de Lomagne (FR)**

(74) Mandataire : **Dellicour, Paul**
**Office de Brevets E. Dellicour rue Fabry 18/012**
**B-4000 Liège (BE)**

(54) **Arracheuse attelée à l'arrière d'un tracteur.**

(57)    L'invention concerne une arracheuse destinée à être attelée à l'arrière d'un tracteur agricole pour la récolte de plants cultivés pour leur partie souterraine.

Selon l'invention, cette arracheuse est constituée d'un châssis roulant 100 sur le sol monté coulissant (flèche F) le long d'un cadre transversal 300 fixé à l'arrière du tracteur agricole considéré. Ce cadre 300 se compose d'un bâti formé par une poutre haute 301 munie au milieu de sa face supérieure d'un organe d'accrochage 311 et par une poutre basse 302 munie de deux organes d'accrochage 312a et 312b semblables au précédent et disposés de façon symétrique sur sa face inférieure pour former avec le précédent un triangle, pour être maintenu par l'attelage triangulé classique du tracteur agricole considéré. Le susdit châssis 100 est composé d'une structure formée par deux longerons parallèles 101a et 101b surmontés vers le nez 110 du châssis par deux chandelles 111a et 111b elles-mêmes reliées entre elles par une glissière haute 112 et par une glissière basse 113 disposées parallèles et dos-à-dos dont la section interne est en correspondance avec la section externe des poutres 301 et 302 du cadre 300 de telle sorte que lesdites poutres étant engagées dans lesdites glissières, ledit châssis 100 est maintenu solidaire du susdit cadre 300 quoique de façon mobile.

**EP 0 470 944 A1**

Fig. 1

La présente invention a trait à la mécanisation de la récolte de plantes cultivées pour leur partie souterraine telle que tubercule, racine ou bulbe, et concerne plus particulièrement une machine agricole destinée à être attelée à l'arrière d'un tracteur agricole pour arracher des plants et conditionner en partie au moins ces derniers.

Une telle machine agricole ou arracheuse, est constituée le plus souvent d'un châssis mobile sur lequel sont agencés un soc pour déraciner et soulever les plants et un cueilleur pour déterrer les plants déracinés et les acheminer en arrière de l'arracheuse considérée. Les plants ainsi récoltés sont conditionnés à des degrés divers à même la machine agricole. Ce conditionnement autrefois manuel est à présent mécanisé. Ce conditionnement est variable en raison de la nature des plants, de leur mode de commercialisation et du degré de technicité mis en oeuvre par l'arracheuse.

Comme il apparaît dans les brevets français n,2.398.442 au nom de SIMON et n,2.539.948 au nom de GILLE et dans le brevet américain n,4.173.257 au nom de MORTENSEN, des machines sont mises au point pour un type de récolte et sont donc peu susceptibles d'adaptation aux conditions particulières d'exploitation d'une autre récolte. En effet, les nombreuses recherches qui ont été menées visent surtout la mécanisation des opérations successives appliquées aux plants après que ces derniers aient été cueillis. En conséquence, ces recherches ont abouti à la fabrication de machines agricoles complexes, donc peu fiables et coûteuses, et mal adaptées, donc d'un faible rendement.

Ce que constatant, le demandeur a effectué des recherches ayant pour objet les améliorations nécessaires à une arracheuse destinée à être attelée à l'arrière d'un tracteur agricole, dont la conception et la fabrication relèvent des techniques connues dans le machinisme agricole, tout en offrant des performances inusitées pour la récolte des plants, en raison d'un coût de production et d'exploitation peu élevés.

Pour ce faire, l'arracheuse de plants selon l'invention est constituée d'un châssis rigide sur lequel sont agencés divers organes fonctionnels concourrant à la récolte et au conditionnement des plants. Ce châssis repose sur, le sol par l'intermédiaire de quatre roues libres. C'est donc tout le poids de l'arracheuse qui est transmis au sol pendant la récolte au moyen de ces roues. Ainsi, il n'est pas nécessaire que le tracteur agricole auquel est attelée l'arracheuse, développe une grande puissance motrice pour traîner cette dernière. De plus, un châssis rigide et auto-porté confère à l'arracheuse une grande stabilité.

Le châssis est accroché à l'arrière du tracteur par l'intermédiaire d'un cadre transversal dont la longueur outrepasse la largeur du châssis. Ce cadre est maintenu fixe tandis que le châssis peut coulisser latéralement le long du cadre.

En conséquence, l'ensemble de l'arracheuse peut être translaté d'un côté ou de l'autre du tracteur. Il résulte de cette disposition, de nombreux avantages dont découle l'adaptabilité de l'arracheuse de l'invention aux conditions particulières de chaque récolte.

Parmi ces avantages :
- l'abord du champ peut s'effectuer en un point quelconque de ce dernier sans passage préalable, l'arracheuse étant soit déportée d'un côté ou de l'autre du tracteur, soit conservée dans l'axe de ce dernier ;
- la continuité de la récolte peut être assurée par des allers-retours successifs du tracteur dans le champ, l'arracheuse étant déportée alternativement d'un côté puis de l'autre du tracteur ;
- l'alignement de l'arracheuse dans l'axe du tracteur peut être immédiatement modifié en raison des irrégularités des rangées de plants à récolter.

Le cadre est solidarisé au tracteur au niveau de l'attelage classique "à trois points" de ce dernier. Un tel attelage est généralement associé au système de relevage du même tracteur si bien que l'arracheuse de l'invention, au lieu d'être traînée, peut, le cas échéant être portée au-dessus du sol. Cette possibilité facilite certaines manoeuvres dont celle du demi-tour du tracteur en bout de champ, ou celle du déplacement du convoi sur les voies de circulation.

En avant de l'arracheuse, installé sous le châssis et en liaison directe avec ce dernier, est disposé un soc destiné à être enfoui dans le sol pour y déraciner les plants à récolter. Ainsi disposé, ce soc bénéficie de la solidité nécessaire au châssis pour supporter les contraintes auxquelles il est lui-même soumis, sans interférer avec les autres organes fonctionnels quine requièrent pas une telle solidité.

Ces organes sont regroupés principalement sur un portique monté sur le châssis où ils constituent les éléments distincts d'une chaîne automatique de conditionnement des plants arrachés. Cette chaîne est formée dans sa version de base d'un cueilleur qui pince les plants arrachés par le soc, pour les extraire du sol et les acheminer jusqu'à un convoyeur axial au moyen duquel les plants cueillis sont évacués vers l'arrière de l'arracheuse.

Cette version de base est modulable par l'adjonction d'organes fonctionnels complémentaires tels que :
- un équeuteur destiné à sectionner les tiges des plants à une longueur déterminée, et interposé entre le cueilleur et le tapis axial ;
- et/ou un lieur-botteleur destiné à lier les plants rassemblés en bottes, et suspendu au-dessus du convoyeur axial ;

– etc...

L'avantage qui résulte de la modularité d'une telle chaîne de conditionnement réside dans l'adéquation des moyens de récolte aux besoins découlant des conditions particulières de cette récolte. Ces besoins peuvent en effet considérablement varier d'une culture à l'autre, voire pour une même culture, d'une région à une autre.

La hauteur au sol du cueilleur constitutif de la chaîne de conditionnement dans sa version de base doit être réglable en raison de l'état des plants à récolter. C'est pourquoi, le portique est monté sur le châssis de façon articulée de telle sorte que, le portique étant basculé en avant ou en arrière, la hauteur au sol du cueilleur varie aussi.

En outre, l'ensemble des organes fonctionnels solidaires du portique basculent avec ce dernier. Ainsi, les éléments de la chaîne de conditionnement restent en corrélation les uns avec les autres pour fournir un rendement uniforme.

Le coulissement du châssis le long du cadre ou la profondeur de fouille dans le sol, ou d'autres réglages, doivent être effectués en cours de récolte. Pour ce faire, ces réglages sont effectués par la manoeuvre de vérins hydrauliques mus par un fluide moteur en provenance du tracteur agricole. Un poste de manoeuvre est installé sur le châssis, depuis lequel un seul opérateur surveille la récolte. Ce poste de manoeuvre comprend un boîtier de commande auquel aboutissent, d'une part le circuit hydraulique principal en provenance du tracteur pour fournir le fluide moteur, et, d'autre part, les circuits hydrauliques secondaires qui alimentent les vérins. De la sorte, l'alimentation en fluide moteur de ces derniers, donc leur commande, est contrôlée au niveau du boîtier de commande, par l'unique opérateur que nécessite l'arracheuse selon l'invention.

Bien que les aspects principaux de l'invention considérés comme nouveaux aient été exprimés ci-dessus, de plus amples détails concernant un mode de réalisation préférée d'une arracheuse respectant les concepts fondamentaux de l'invention ci-dessus exposés, seront mieux compris en se référant à la description ci-après et aux dessins l'accompagnant illustrant ce mode de réalisation.

Sur ces dessins :

La figure 1 est une vue générale en perspective de trois quart avant d'une telle machine.

La figure 2 est une coupe schématique qui découle de la figure 1.

Les figures 3 et 4 sont des vues de détails et en perspective de trois-quart avant de la même machine.

L'arracheuse représentée sur l'ensemble de ces dessins a été dépouillée des éléments d'habillage quine contribueraient pas à mieux mettre en évidence les caractéristiques de l'invention décrite ci-après.

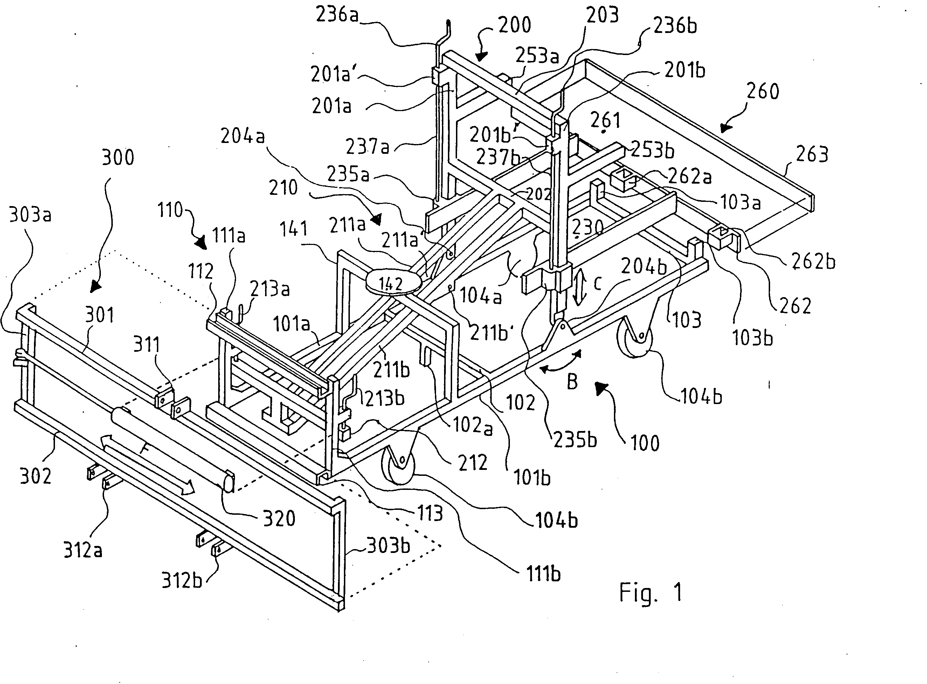

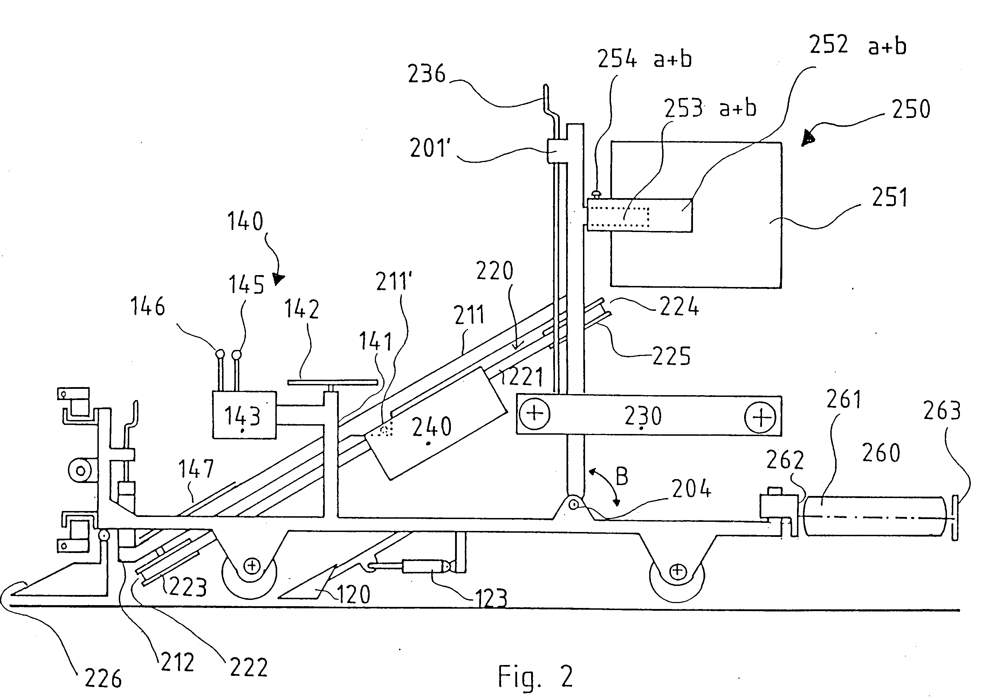

Telle que représentée sur les dessins des figures 1 et 2, l'arracheuse selon l'invention est constituée d'un châssis 100 long et étroit dont la structure est formée par deux longerons 101a et 101b parallèles reliés entre eux par une traverse médiane 102 et par une traverse arrière 103.

Ce châssis 100 prend appui sur le sol au moyen de quatre roues 104a et 104b stabilisatrices disposées par paire vers l'avant et vers l'arrière des longerons 101a et 101b.

L'arracheuse selon l'invention est constituée aussi d'un portique composé d'un arceau 200 et d'une rampe 210. L'arceau 200 est formé par deux poteaux 201a et 201b verticaux reliés entre eux de façon parallèle par une entretoise moyenne 202 et par une entretoise haute 203. La rampe 210 est formée par deux étais 211a et 211b obliques et parallèles reliés entre eux à leur extrémité haute par l'entretoise moyenne 202 et à leur extrémité basse par une barre de suspension 212.

L'arracheuse selon l'invention est constituée enfin d'un cadre 300 dont le bâti est formé d'une poutre haute 301 et d'une poutre basse 302 maintenues horizontales et parallèles entre elles au moyen de deux montants 303a et 303b.

Ce cadre 300 est fixé de façon transversale à l'arrière d'un tracteur agricole où il constitue l'interface entre ce dernier et le châssis 100 pour autoriser en même temps le maintien ferme de l'arracheuse avec le tracteur et le déplacement latéral de l'arracheuse par rapport à ce même tracteur.

Pour ce faire, la poutre haute 301 présente au milieu de sa face supérieure, un organe d'accrochage 311 et la poutre basse 302 présente, disposés de façon symétique sur sa face inférieure, deux organes d'accrochage 312a et 312b semblables au précédent et formant avec lui un triangle.

Chaque organe d'accrochage 311, 312a et 312b est formé par deux languettes parallèles dressées sur chant et percées vers l'avant de trous ronds en regard l'un de l'autre pour permettre le passage d'une même goupille. L'écartement ménagé entre les deux languettes offre un logement pour la tête percée de l'un des points d'accrochage de l'attelage triangulé classique d'un tracteur agricole.

Ainsi, les organes d'accrochage 311, 312a, 312b permettent d'atteler l'arracheuse de l'invention au système de relevage couplé à l'attelage triangulé du tracteur.

Pour ce faire aussi, les longerons 101a et 101b sont surmontés au nez 110 du châssis 100 par deux chandelles 111a et 111b verticales reliées entre elles de façon parallèle par une glissière haute 112 et par-une glissière basse 113. Ces glissières 112 et 113 sont préformées dans un profilé en "U" dont la section interne est en correspondance avec la section externe des poutres 301 et 302 du cadre 300. Ces dernières étant engagées dans leurs glissières 112 et 113 respectives, le châssis 100 coulisse (flèche à double sens F) le long du cadre 300. Ces mêmes glissières 112 et 113 sont opposées dos-à-dos si bien que les poutres 301 et 302 ne peuvent pas s'en échapper par le bas ou par le haut.

Par ailleurs, les montants 303a et 303b du cadre 300 constituent les butées qui limitent de part et d'autre du cadre 300, le coulissement F du châssis 100 et s'opposent à l'échappement latéral des poutres 301 et 302.

En conséquence, le châssis 100 est non seulement fermement maintenu par le cadre 300 mais aussi solidaire de ce dernier quoique de façon mobile.

Pour ce faire enfin, un vérin hydraulique transversal à double effet 320 agrippe d'une part le cadre 300 au niveau du montant 303a auquel est fixée la tête du segment mobile de ce vérin transversal 320. Le corps du même vérin transversal 320 est fixé d'autre part aux chandelles 111a et 111b du nez 100 du châssis 100.

L'extension de la tige du vérin transversal 320 entraîne le châssis 100 vers l'un des côtés du cadre 300 tandis que la rétraction de la même tige dans le corps renvoie le châssis 100 vers l'autre côté du cadre 300 selon des déplacements latéraux à double sens opposés illustrés par la flèche F.

L'avantage qui résulte de la commande d'un tel vérin hydraulique 320 réside dans le contrôle permanent de l'alignement de l'arracheuse par rapport au tracteur agricole et de la modification de cet alignement pendant la progression de ce tracteur.

Le même portique 200 est articulé de façon réglable sur le châssis 100 selon un mouvement de bascule double (flèche B) longitudinal variable.

A cet effet, les poteaux 201a et 201b sont reliés aux longerons 101a et 101b par l'intermédiaire d'articulations 204a et 204b.

Par ailleurs, la barre de suspension 212 est reliée par ses extrémités aux longerons 101a et 101b par l'intermédiaire de manivelles courtes 213a et 213b dont les tiges filetées sont engagées à travers des écrous fixés sur les faces postérieures des chandelles 111a et 111b respectives.

La rotation de l'une et l'autre des manivelles courtes 213a et 213b détermine l'abaissement ou la montée de l'extrémité correspondante de la barre de suspension 212.

Le réglage conséquent de la partie basse de la rampe 210 entraîne solidairement la bascule avant ou arrière de l'arceau du portique 200.

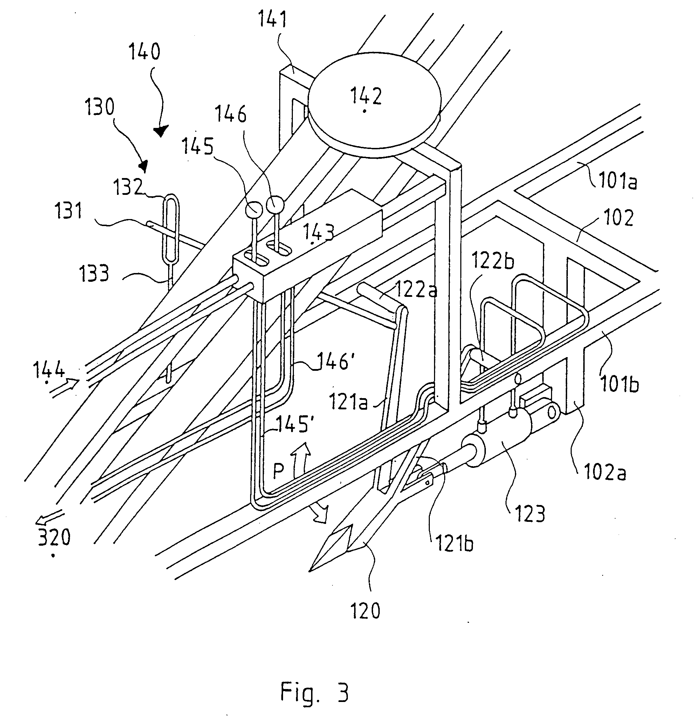

Tel que représenté sur le dessin de la figure 3, le même châssis 100 comporte un soc 120 réglable de façon à adapter sa profondeur dans le sol à la dimension de la partie souterraine des plants à arracher. C'est pourquoi le soc 120 est suspendu entre les longerons 101a et 101b au moyen de bras torses 121a et 121b dont la liaison avec le soc 120 est rigide tandis que leur liaison avec chaque longeron 101a et 101b est articulée autour des pivots respectifs 122a et 122b.

Ainsi, le soc 120 est susceptible d'un mouvement semi-circulaire double (flèche P) dont découle sa profondeur par rapport au niveau du sol.

Un tel mouvement P est contrôlé par un vérin hydraulique longitudinal 123 à double effet dont le segment mobile est articulé à l'arrière du soc 120 et dont le corps est articulé au point bas d'un poinçon 102a suspendu à la traverse médiane 102.

La profondeur du soc 120 dans le sol est visualisée grâce à un témoin 130 disposé sur le même châssis 100. Ce témoin 130 consiste en une tringle oblique 131 dont l'extrémité basse est solidaire d'un des bras torses 121a. Il s'ensuit que la tringle 131, accompagnant les oscillations P du bras torse 121a suivant les variations de la profondeur du soc 120, se déplace vers le haut ou vers le bas. L'extrémité haute de la tringle 131 est engagée au travers de la lumière 132 pratiquée dans un piquet 133 fiché sur le longeron 101a en correspondance avec le bras torse 121a considéré.

La lumière 132 est un repère fixe qui met en évidence les déplacements de la tringle 131. L'étalonnage de ce repère renseigne avec rigueur sur la profondeur du soc 120 dans le sol.

Tel que représenté sur les dessins des figures 1, 2 et 3, le même châssis 100 accueille un poste de manoeuvre 140 composé d'un cavalier 141 supportant un siège 142. Comme on peut le voir sur le dessin de la figure 1, le cavalier 141 est implanté sur les longerons 101a et 101b entre les chandelles 111a et 111b et les poteaux 201a et 201b. Le poste de manoeuvre 140 comprend aussi un boîtier de commande 143 auquel aboutit par l'intermédiaire d'une pompe 144 appropriée, le fluide hydraulique du tracteur agricole.

L'alimentation en fluide hydraulique des vérins transversal 320 et longitudinal 123 provient donc du boîtier de commande 143.

En conséquence, l'opérateur dans la position sur le siège 142 lui permet de surveiller à la fois l'alignement de l'arracheuse par rapport au tracteur agricole et la profondeur du soc 120 dans le sol, peut modifier l'un et l'autre de ces deux réglages en cours de récolte. A cette fin, l'opérateur dispose sur le boîtier de commande 143 d'une part :

– d'une poignée de réglage 145 agissant sur le circuit hydraulique 145' du vérin longitudinal 123 ;

– et d'autre part, d'une poignée de réglage 146 agissant sur le circuit hydraulique 146' du vérin transversal 320.

Le même poste de manoeuvre 140 est composé enfin d'un plancher formé par le carter de protection isolant l'opérateur assis sur le siège 142 de la rampe 210 et des organes qu'elle abrite.

Tel que représenté sur les dessins des figures 1 et 2, le même portique 200 reçoit l'organe de cueillette des plants et les autres organes formant la chaîne de conditionnement des plants cueillis.

Particulièrement, la rampe 210 supporte un cueilleur 220 du type de celui à bandes sans fin 221 décrit dans les brevets précités.

L'entrée 222 du cueilleur 220 est déterminée entre deux poulies de tension 223 coplanaires et situées près de la barre de suspension 212 dont le réglage défini la hauteur au sol de l'entrée 222.

La sortie 224 du cueilleur 220 est déterminée entre deux poulies motrices 225 coplanaires et situées sous l'entretoise moyenne 202 qui entraînent les bandes sans fin 221.

Cette sortie 224 débouche au-dessus d'un convoyeur axial 230 de telle sorte que les plants pincés par leurs tiges entre les bandes sans fin 221 sont ensuite déposés debout sur le convoyeur axial 230.

Le cueilleur 220 et le convoyeur axial 230 collaborent au transport des plants déracinés par le soc 120 et collaborent à l'élévation de ces plants vers la chaîne de conditionnement.

Le cueilleur 220 et le convoyeur axial 230 constituent les organes de base inamovibles de l'arracheuse de l'invention.

Pour son meilleur rendement, le même cueilleur 220 est précédé d'un système de guidage 226 des plants à cueillir composé de deux becs disposés en parallèle sous le nez 110 du châssis 100, de part et d'autre de l'entrée 222. L'avant effilé des becs leur permet de glisser sous les tiges des plants couchées au sol et de relever progressivement ces dernières. Du même coup, les becs déterminent entre eux un couloir allant se rétrécissant de sorte que les plants déracinés ne puissent échapper au cueilleur 220. Ces becs sont articulés à la structure 100 autour des pivots co-axiaux pour permettre au système de guidage de s'effacer contre les irrégularités du sol. C'est pourquoi ces becs demeurent distincts du cueilleur 220 lui-même dont le réglage affecterait encore le rendement du système de guidage.

Selon un mode de réalisation préférée de l'arracheuse de l'invention, un organe d'équeutage des plants arrachés est intercalé entre le cueileur 220 et le convoyeur axial 230. Cet équeuteur 240 classique dans sa conception mécanique présente un dispositif d'accrochage particulier pour le rendre amovible. Selon un tel dispositif d'accrochage, la rampe 210 présente deux pattes 211a' et 211b' fixées sur les faces inférieures des étais 211a et 211b et percées chacune d'un trou rond en attente de l'un des boulons correspondants dont est muni l'équeuteur 240.

Selon un autre mode de réalisation préférée de l'arracheuse de l'invention, un organe de liage et de bottelage des plants cueillis est suspendu au-dessus du convoyeur axial 230 et collabore avec ce dernier pour lier les plants en bottes. Ce lieur-botteleur 250, classique dans sa conception mécanique, présente un dispositif de suspension particulier pour le rendre amovible. En effet, le lieur-botteleur 250 est coiffé d'un carter 251 dont les parois latérales déterminent entre elles un couloir qui permet de canaliser les tiges des plants debouts sur le convoyeur axial 230. A l'extérieur et le long des parois latérales de ce carter 251 sont disposés de façon horizontale, deux segments creux 252a et 252b parallèles entre eux. La section interne de ces segments creux 252a et 252b est déterminée en correspondance avec la section externe de deux manchons 253a et 253b parallèles entre eux et implantés de façon horizontale sur les faces postérieures des poteaux 201a 201b. Ainsi, le lieur-botteleur 250 est suspendu à l'arceau 200 par emmanchement des manchons 253a et 253b dans les segments creux 252a et 252b. Le blocage provisoire du dispositif de suspension 251 est obtenu par pression d'une vis de blocage 254a et 254b contre chaque manchon 253a et 253b au travers du segment creux 252a et 252b correspondant.

Selon un autre mode de réalisation préférée de l'arracheuse de l'invention, un convoyeur de déport 260 est disposé en arrière du convoyeur axial 230, en contrebas de ce dernier de façon à récupérer les plants conditionnés pour les déporter vers la bande de terrain travaillée lors du précédent passage de l'arracheuse ou vers une aire ou vers un conteneur de stockage. Pour ce faire, le convoyeur de déport 260 est constitué d'un tapis roulant 261 autour de rouleaux suspendus entre deux joues 262a et 262b. La face antérieure d'une 262 des joues présente au moins deux bagues horizontales et coplanaires 262a et 262b. La section interne de ces bagues est déterminée en correspondance avec la section externe de deux tenons 103a et 103b parallèles entre eux et implantés de façon verticale sur la face supérieure de la traverse arrière 103 située en bout de structure du châssis 100. De la sorte, le convoyeur de déport 260 vient prolonger l'arrière du châssis 100 de manière amovible par emmanchement des tenons 103a et 103b dans les bagues 262a et 262b correspondantes.

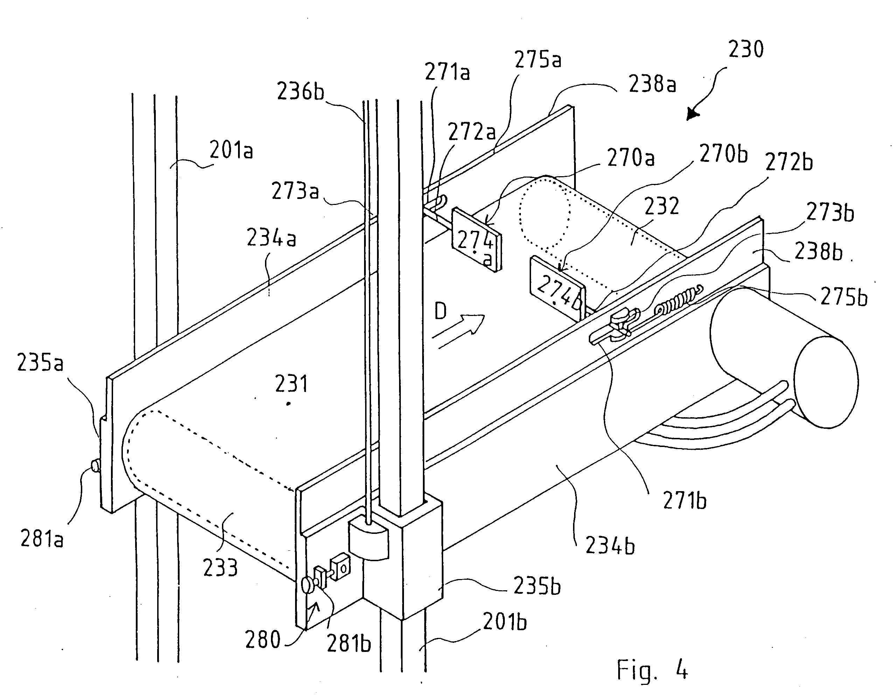

Tel que représenté sur les dessins des figures 1, 2 et 4, le susdit convoyeur axial 230 est constitué d'un tapis 231 roulant autour d'un rouleau moteur 232 et d'un rouleau de tension 233 suspendus entre deux flasques 234a et 234b parallèles et horizontales. Ces flasques 234a et 234b sont conjoints par leurs faces externes à deux embouts creux 235a et 235b verticaux dont la section intérieure est déterminée en correspondance avec la section externe des poteaux 201a et 201b de l'arceau du portique 200. Ces derniers étant engagés dans les embouts creux 235a et 235b, le convoyeur axial 230 coulisse le long dudit arceau, pour la portion de ce dernier comprise entre les articulations 204a et 204b et l'entretoise moyenne 202. Le coulissement du convoyeur axial permet de régler la distance entre le tapis roulant 231 et le mécanisme du lieur-botteleur 250 avec lequel il collabore.

Pour ce faire, les flasques 234a et 234b sont associés à deux longues manivelles 236a et 236b dont les tiges filetées 237a et 237b sont engagées au travers de deux écrous 201a' et 201b' implantés au sommet des poteaux respectifs 201a et 201b. Il résulte que la rotation de chaque manivelle longue 236a et 236b entraîne l'élévation ou l'abaissement (flèche C) du convoyeur axial 230 par rapport au lieur-botteleur 250.

Les mêmes flasques 234a et 234b déterminent dans leurs bordures supérieures des rebords 238a et 238b de part et d'autre du tapis roulant 231 et au-dessus de ce dernier. Le convoyeur axial 230 est barré à son extrémité postérieure par deux arêtoirs 270a et 270b battant au-dessus du tapis roulant 231 et affleurant les rebords 238a et 238b. A cet effet, les rebords 238a et 238b sont percés par des lumières horizontales 271a et 271b au travers desquelles sont engagées les tiges 272a et 272b des arêtoirs 270. Ces tiges 272a et 272b sont mobiles autour d'axes verticaux 273a et 273b. Elles sont munies, pour leurs parties internes au convoyeur axial 230, de palettes 274a et 274b disposées en travers du tapis roulant 231, et, pour leurs parties externes au même convoyeur axial 230, de tendeurs 275a et 275b dont la traction sur ces tiges 272a et 272b force les palettes 274a et 274b à l'inverse du sens de déroulement (flèche D) du tapis roulant 231. Cette disposition a pour effet de contenir les plants cueillis sur le tapis roulant 231 de façon à ce que ces plants s'agglutinant pour former une botte restent bien debouts et de façon à ce que, sous la pression conjuguée de tous ces plants, leurs bottes forcent l'une après l'autre le passage entre les arétoirs 270a et 270b.

La vitesse du déroulement D du même tapis roulant 231 est modulable grâce à un dispositif de freinage 280. Ce dernier consiste en deux rainures horizontales pratiquées aux extrémités antérieures des flasques 234a et 234b et au travers desquelles sont engagées les deux extrémités du moyeu du rouleau de tension 233. Ces extrémités sont assujetties à l'extérieur des flasques 234a et 234b à deux vis de réglage 281a et 281b respectives, elles-mêmes engagées dans des écrous correspondants solidaires des flasques 234a et 234b. La rotation des vis de réglage 281a et 281b modifie la longueur de l'entraxe du rouleau moteur 232 et du rouleau de tension 233. Il s'ensuit une tension plus ou moins grande du tapis roulant 231 dont découle la vitesse de son déroulement D.

Cette disposition a pour effet d'ajuster l'agglutination des plants cueillis contre les arêtoirs 270a et 270b en raison d'une part du nombre de plants arrachés récoltés par le cueilleur 220 et en raison d'autre part de la cadence de travail du lieur-botteleur 250.

On comprend que l'arracheuse qui vient d'être ci-dessus décrite et représentée, l'a été en vue d'une divulgation plutôt que d'une limitation. Bien entendu, divers aménagements, modifications et améliorations pourront être apportés à l'exemple de réalisation ci-dessu, sans pour autant sortir du cadre de l'invention pris dans ses aspects et dans sont esprit les plus larges.

Il est utile de préciser que les détails techniques de réalisation des différents organes de cueillette et de conditionnement des plants n'ont pas été soulevés dans la présente description car considérés comme agencés par un homme de métier.

Afin de permettre une meilleure compréhension des dessins, une liste des références avec leurs légendes est ci-après énumérée.

100 ..................... Structure du châssis,
    101a,101b ................ Longerons,
    102 ..................... Traverse médiane,
    102a .................... Poinçon sur la traverse médiane,
    103 ..................... Traverse arrière,
    103a,103b ............... Tenons de la traverse arrière,
    104a,104b ............... Roues,
  110 ..................... Nez du chassis,
    111a, 111b .............. Chandelles,
    112 ..................... Glissière haute,
    113 ..................... Glissière basse,
  120 ..................... Soc
    121a, 121b .............. Bras torses,
    122a, 122b .............. Pivots,
    123 ..................... Vérin longitudinal,
  130 ..................... Témoin de profondeur,
    131 ..................... Tringle,
    132 ..................... Lumière,
    133 ..................... Piquet,
  140 ..................... Poste de manoeuvre,
    141 ..................... Cavalier,
    142 ..................... Siège,
    143 ..................... Boîtier de commande,
    144 ..................... Pompe,
    145/146 ................. Poignées de réglage,
    145'/146' ............... Circuits hydrauliques,
    147 ..................... Plancher,
  200 ..................... Arceau du portique,
    201a, 201b .............. Poteaux,
    201a',201b' ............. Ecrous,
    202 ..................... Entretoise moyenne,

| | |
|---|---|
| 203 | Entretoise haute, |
| 204a,204b | Articulations, |
| 210 | Rampe, |
| 211a, 211b | Etais, |
| 211a',211b' | Pattes d'accrochage de l'équeuteur 240, |
| 212 | Barre de suspension, |
| 213a,213b | Manivelles courtes, |
| 220 | Cueilleur, |
| 221 | Bande sans fin, |
| 222 | Entrée de la bande, |
| 223 | Poulies de tension, |
| 224 | Sortie de la bande, |
| 225 | Poulies d'entraînement, |
| 226 | Système de guidage, |
| 230 | Convoyeur axial, |
| 231 | Tapis roulant, |
| 232 | Rouleau moteur, |
| 233 | Rouleau de tension, |
| 234a, 234b | Flasques, |
| 235a, 235b | Embouts creux, |
| 236a, 236b | Manivelles longues, |
| 237a, 237b | Tiges filetées, |
| 238a, 238b | Bordures des flasques, |
| 240 | Equeuteur, |
| 250 | Lieur - botteleur, |
| 251 | Carter, |
| 252a, 252b | Segments creux, |
| 253a, 253b | Manchons, |
| 254a, 254b | Vis de blocage, |
| 260 | Convoyeur de déport, |
| 261 | Tapis roulant, |
| 262,263 | Joues, |
| 262a,262b | Bagues, |
| 270a, 270b | Arêtoirs, |

271a, 271b............... Lumières,

272a, 272b............... Tiges,

273a, 273b............... Axes verticaux,

274a, 274b.............. Palettes,

275a, 275b.............. Tendeurs,

280....................... Dispositif de freinage,

281a, 281b.............. Vis de réglage,

300......................... Bâti du cadre,

301..................... Poutre haute,

302..................... Poutre basse,

303a, 303b............. Montants,

311,312a,321b........... Organes d'assemblage triangulé,

320...................... Vérin transversal,

DOUBLE FLECHE F.......... Déplacements latéraux du châssis 100,

DOUBLE FLECHE P.......... Mouvement semi-circulaire du soc 120,

DOUBLE FLECHE B.......... Bascule du portique 200,

FLECHE D................. Déroulement du convoyeur axial.

DOUBLE FLECHE C.......... Elévation ou abaissement du convoyeur axial 230

## Revendications

1. Arracheuse destinée à être attelée à l'arrière d'un tracteur agricole pour la récolte de plants cultivés pour leur partie souterraine constituée d'une part d'un châssis roulant (100) sur le sol acceuillant un poste de manoeuvre (140) et supportant un soc (120) pour déraciner les plants dans le sol et constituée d'autre part d'un portique (200) articulé sur ledit châssis (100) et recevant divers organes de cueillette et de conditionnement des plants déracinés, **CARACTERISEE PAR LE FAIT QUE** le susdit châssis (100) est monté coulissant (flèche F) le long d'un cadre transversal (300) fixé à l'arrière du tracteur agricole considéré.

2. Arracheuse selon la revendication 1, **CARACTERISEE PAR LE FAIT QUE** le susdit cadre (300) est composé d'un bâti formé par une poutre haute (301) munie au milieu de sa face supérieure d'un organe d'accrochage (311) et par une poutre basse (302) munie de deux organes d'accrochage (312a et 312b) semblables au précédent et disposés de façon symétrique sur sa face inférieure pour former avec le précédent un triangle, lesdites poutres (301 et 302) étant maintenues horizontales et parallèles entre elles au moyen de montants 303a et 303b), de telle sorte que ledit cadre (300) est maintenu par l'attelage triangulé classique du tracteur agricole considéré, **ET PAR LE FAIT QUE** le susdit châssis (100) est composé d'une structure formée par deux longerons parallèles (101a et 101b) reliès entre eux par une traverse médiane (102) et par une traverse arrière (103) et surmontés vers le nez (110) du châssis par deux chandelles (111a et 111b) elles-mêmes reliées entre elles par une glissière haute (112) et par une glissière basse (113) disposée parallèles et dos-à-dos dont la section interne est en correspondance avec la section externe des poutres (301 et 302) du cadre (300) de telle sorte que lesdites poutres étant engagées dans lesdites glissières, ledit châssis (100) est maintenu solidaire du susdit cadre (300) quoique de façon mobile.

3. Arracheuse selon les revendications 1 et 2, **CARACTERISEE PAR LE FAIT QUE** le susdit portique est composé d'une part, d'un arceau (200) formé par deux poteaux (201a et 201b) articulés (flèche B) sur les susdits longerons (101a et 101b) dudit châssis (100) et maintenus parallèles entre eux par une entretoise haute (203) et par une entretoise moyenne (202) et est composé d'autre part, d'une rampe (210) formée par deux étais oblique (211a et 211b) dont l'extrémité haute est fixée sur ladite entretoise moyenne (202) et dont l'extrémité basse est assujettie à une barre de suspension (212) dont la hauteur au sol est variable, entraînant la variation de la bascule (flèche B) de l'arceau (200), lequel mouvement de bascule est assuré grâce à la susdite barre de suspension (212) qui est reliée aux susdits longerons (101a et 101b) par l'intermédiaire de deux manivelles courtes (213a et 213b) dont les tiges filetées sont engagées à travers deux écrous fixés sur les susdites chandelles (11a et 111b) du châssis 100).

4. Arracheuse selon les revendications 1 et 2, **CARACTERISEE PAR LE FAIT QUE** l'un (303a) des susdits montants du cadre (300) est muni d'un ergot qui reçoit la tête du segment mobile d'un vérin hydraulique à double effet transversal (320) dont le corps est fixé sur l'une (111b) des faces antérieures des susdites chandelles dudit châssis (100) et dont la commande permet le déplacement latéral (flèche F) du susdit châssis pendant la progression du tracteur agricole considéré.

5. Arracheuse selon les revendications 1 et 2, **CARACTERISEE PAR LE FAIT QUE** le susdit soc (120) est suspendu entre les susdits longerons (101a et 101b) du châssis (100) par l'intermédiaire d'une part, de bras torses (121a et 121b) ancrés sur lecit soc et articulés (flèche P) sur lesdits longerons (101a et 101b) et par l'intermédiaire d'autre part, d'un vérin hydraulique longitudinal (123) dont le segment mobile est articulé à l'arrière du même soc (120) et dont le corps est articulé sur la traverse médiane (102) du châssis (100) par l'intermédiaire d'un poinçon (102a) de telle sorte que la profondeur du soc (120) dans le sol est réglable pendant la progression du tracteur agricole considéré.

6. Arracheuse selon les revendications 1, 2 et 3, **CARACTERISEE PAR LE FAIT QUE** le susdit poste de manoeuvre (140) est composé d'un cavalier (141) implanté sur les susdits longerons (101a et 101b) du châssis (100) entre le susdit nez (110) du châssis (100) et le susdit arceau du portique (200) et au-dessus de la susdite rampe (210) et supportant un siège (142) et est composé d'un boitier de commande (143) auquel aboutit le fluide hydraulique du tracteur agricole considéré.

7. Arracheuse selon les revendications 1, 2 et 3, **CARACTERISEE PAR LE FAIT QUE** le susdit arceau (200) comporte deux manchons horizontaux et parallèles (253a et 253b) implantés sur les susdits poteaux (201a et 201b) et qui sont emmanchés dans les segments creux (252a et 252b) en correspondance d'un lieur-botteleur (250) suspendu audit arceau (200) de façon amovible.

8. Arracheuse selon les revendications 1, 2 et 3, **CARACTERISEE PAR LE FAIT QUE** la susdite rampe (210) supporte un cueilleur (220) dont l'entrée (222) est précédée par un système de guidage (226) formés de deux becs suspendus de façon articulées sous le nez (110) du châssis (100).

9. Arracheuse selon les revendications 1, 2, et 5, **CARACTERISEE PAR LE FAIT QU'**une tringle oblique (131) est solidaire par son extrémité basse de l'un (121a) des susdits bras torses tandis que son extrémité haute est engagée au travers d'une lumière (132) pratiquée dans un piquet (133) fiché sur l'un des susdits longerons (101a et 101b) de telle sorte que ladite lumière (132) met en évidence les déplacements de la tringle suivant les variations de la profondeur du soc (120) dans le sol.

10. Arracheuse selon les revendications 1 à 9 prises ensembles, **CARACTERISEE PAR LE FAIT QUE** le susdit arceau (200) supporte un convoyeur axial (230) situé sous le susdit lieur-botteleur (250) et en arrière du susdit cueilleur (220), lequel convoyeur axial (230) est composé d'un tapis roulant (231) autour de rouleaux (232 et 233) entre deux flasques (234a et 234b) munis à leurs surfaces externes d'embouts creux (235a et 235b) qui coulissent le long des susdits poteaux (201 et 201b) de l'arceau (200) de telle sorte que la hauteur au sol dudit convoyeur axial (230) est réglable.

11. Arracheuse selon l'une quelconque des revendications 1 à 10, **CARACTERISEE PAR LE FAIT QUE** sur la susdite traverse arrière (103) du châssis (100) sont implantés deux tenons (103a et 103b) verticaux et parallèles qui sont emmanchés dans les bagues correspondantes (262a et 262b) d'un convoyeur de déport (260) disposé en travers du susdit châssis (100) à l'arrière et en contre-bas du susdit convoyeur axial (230).

12. Arracheuse selon l'une quelconque des revendications 1 à 11, **CARACTERISEE PAR LE FAIT QUE** la susdite rampe (210) est munie à la face inférieure de chaque susdit étai (211a et 211b) d'une patte (211a'

et 211b') percée en l'attente de l'un des boulons d'un équeuteur (240) intercalé de façon amovible entre le susdit cueilleur (220) et le susdit convoyeur axial (230).

13. Arracheuse selon la revendication 10, **CARACTERISEE PAR LE FAIT QUE** les susdits flasques (234a et 234b) du convoyeur axial (230) sont solidaires de deux manivelles longues (236a et 236b) dont les tiges filetées (237a et 237b) sont engagées au travers d'écrous (201a' et 201b') fixés aux poteaux (201a et 201b) de l'arceau (200).

14. Arracheuse selon la revendication 10, **CARACTERISEE PAR LE FAIT QUE** les susdits flasques (234a et 234b) du convoyeur axial (230) sont percés de deux lumières (271a et 271b) au travers desquelles sont engagées les tiges articulées (272a et 272b) de deux arêtoirs (270a et 270b) qui barrent le susdit convoyeur axial (230) et s'effacent sous la pression des plants entrainés par le déroulement (flèche D) du susdit tapis roulant (231).

15. Arracheuse selon la revendication 10, **CARACTERISEE PAR LE FAIT QUE** les susdits flasques (234a et 234b) du convoyeur axial (230) sont percés de deux rainures dans lesquelles sont engagées les extrémités du moyeu de l'un (233) des susdits rouleaux, lesquelles sont assujetties à des vis de réglage (281a et 281b) d'un dispositif de freinage (280) engagées au travers d'écrous fixés à l'intérieur desdits flasques (234A et 234b).

Fig. 1

Fig. 2

EP 0 470 944 A1

Fig. 3

Fig. 4

**Office européen des brevets**

# RAPPORT DE RECHERCHE EUROPEENNE

Numero de la demande

EP    91 87 0120

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,Y | US-A-4 173 257 (MORTENSEN D.G.)<br>* colonne 6, ligne 56 – colonne 13, ligne 56; figures 1-4 * | 1 | A01D31/00<br>A01D33/00<br>A01B63/00 |
| D,A | | 3,5,8,<br>10,11 | |
| Y | FR-A-2 561 853 (VAGINAY P.)<br>* page 2, ligne 36 – page 5, ligne 39; figures 1-6 * | 1 | |
| A | | 2,4 | |
| A | GB-A-1 371 324 (MARTIN E.H.)<br>* le document en entier * | 1,2,4 | |
| A | FR-A-2 582 468 (LOVATO V.)<br><br>* page 3, ligne 13 – page 5, ligne 12; figures 1-3 * | 1,3,5,7,<br>8,10,11 | |
| D,A | FR-A-2 539 948 (GILLE J.) | | |

**DOMAINES TECHNIQUES RECHERCHES (Int. Cl.5 )**

A01D
A01B

Le présent rapport a été établi pour toutes les revendications

| Lieu de la recherche | Date d'achèvement de la recherche | Examinateur |
|---|---|---|
| LA HAYE | 15 NOVEMBRE 1991 | ELSWORTH D. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)